Europäisches Patentamt

**European Patent Office**

Office européen des brevets

(11) Publication number: **0 102 412**
**B1**

(12) **EUROPEAN PATENT SPECIFICATION**

(45) Date of publication of patent specification: **30.12.86**

(21) Application number: **82201083.1**

(22) Date of filing: **03.09.82**

(51) Int. Cl.⁴: **B 23 Q 5/32, B 25 H 1/00, B 21 J 15/50**

(54) Drilling device, particularly for removing a spot-welded portion.

(43) Date of publication of application:
**14.03.84 Bulletin 84/11**

(45) Publication of the grant of the patent:
**30.12.86 Bulletin 86/52**

(84) Designated Contracting States:
**DE FR GB IT NL**

(56) References cited:
**DE-A-2 139 377**
**DE-A-3 001 361**
**US-A-2 466 965**
**US-A-2 570 296**
**US-A-2 913 934**
**US-A-3 039 330**

(73) Proprietor: **Tsukai, Michiharu**
**52, Kasugacho 6-chome**
**Fukuyama-shi Hiroshima (JP)**

(73) Proprietor: **Maeda Kiko Company Limited**
**11-18, Sonezakishinchi 1-chome**
**Kita-ku Osaka (JP)**

(72) Inventor: **Tsukai, Michiharu**
**52, Kasugacho 6-chome**
**Fukuyama-shi Hiroshima (JP)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The invention relates to a drilling device comprising a main body casing with a chuck receiving holder, fixed to the main body casing, a U-shaped arm, one end of which is connected to the chuck receiving holder, means connected to the U-shaped arm for moving the same relative to a drill, mounted at the free end of a motor driven chuck and facing the free end of the U-shaped arm.

Such a device is known from the US patent 3,039,330.

The object of the present invention is to provide a drilling device, particularly for the removing of a spot-welded portion in an efficient, simple manner, with simultaneous saving of labor.

To accomplish the foregoing object, there is provided in a drilling device according to the first paragraph a chuck receiver for receiving the chuck and being slidably insertable into the main body casing; a grip handle pivotally connected to the base shoulder portion of the U-shaped arm via a pivot pin; a chuck thrusting arm mounted integrally at an end of the grip handle and engaging the chuck receiver for moving the chuck receiver towards the free end of the U-shaped arm by depression of the grip handle, and a projection amount adjusting screw provided at an upper back portion of the grip handle for adjusting the amount of feed movement of the chuck, the tip of the projection amount adjusting screw cooperating with the base shoulder portion of the U-shaped arm to restrict the amount of feed of the chuck by depression of the grip handle.

Further there can be provided a plate thickness adjusting screw fixed at the free end of the U-shaped arm so as to face to the tip portion of the drill.

There can also be provided a spindle air motor for rotating the chuck via a rotary shaft; an air compressor for activating the spindle air motor; a valve provided at the air compressor, for supplying compressed air to the spindle motor in its open state; and a lever for opening and closing a valve of the air compressor, the lever being depressed by the grip handle to open the valve.

Meanwhile it is observed that from the US—A—2,913,934 is known a tool feeding device with means for limiting the stroke of the tool. This patent describes the application of an air motor as power source for rotating the drive shaft. However, it does not describe the accommodation of the spindle motor in the casing and the operation of the air compressor valve by levers which are themselves operated by the grip handle as in the present invention.

From the US patent 2,466,965 is further known a portable drill which can cooperate with an end of a tool of which the other end is adapted for support of a workpiece which has to be drilled.

A detailed description of the invention will be made with reference to the accompanying drawings which are to scale. Like numerals designate corresponding parts in the several figures.

Fig. 1 is a perspective view showing an entire construction of a drilling device according to the present invention;

Fig. 2 is a side elevational view partly in section, showing on an enlarged scale, the drilling device of Fig. 1; and

Figs. 3 and 4 are diagrams explanatory of functions of the device of Fig. 1.

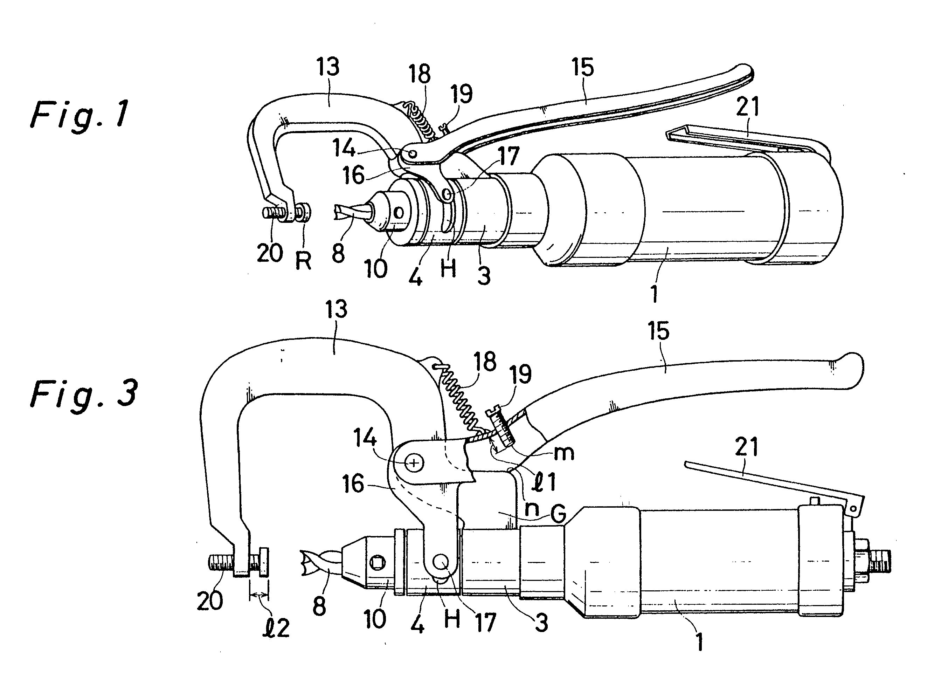

Referring now to the drawings, there is shown, in Figs. 1 through 4, a drilling device according to one preferred embodiment of the present invention, which generally includes a main body casing 1 for the device, a rotary shaft 2 for a spindle air motor to be driven by compressed air supplied from an air compressor (not shown) which is incorporated in said casing 1, a chuck receiving holder 3 threadedly connected to a forward end of the main body casing 1, and a U-shaped arm 13 to be described later integrally fixed, at its base shoulder portion G, to an end of said chuck receiving holder 3.

The drilling device further includes a chuck receiver 4 formed cylindrically, with the rear end portion thereof being slidably fitted into said chuck receiving holder 3 and said main body casing 1. On the other hand, the front end portion of the chuck receiver 4 is formed with a flange P for restricting said sliding movement within a predetermined distance, and also with an engaging groove H to be engaged with an engaging pin 17 of a chuck thrusting arm 16 to be described more in detail later.

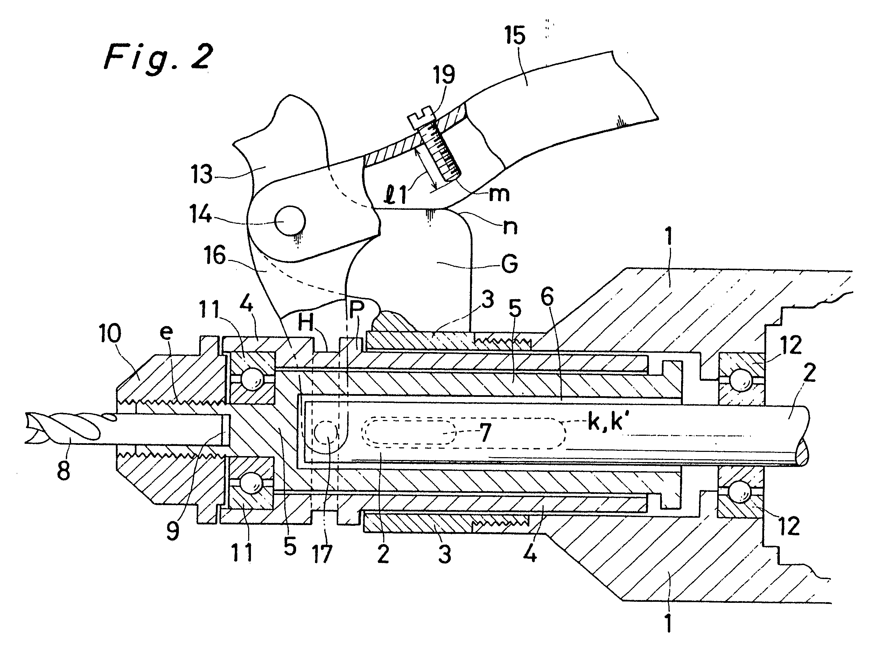

The chuck 5 has a bore 6 axially formed at a central portion in the rear end portion of the chuck 5 for fitting the rotary shaft 2 thereinto, and a slit k is formed therein to extend over a predetermined distance in the longitudinal direction thereof. Accordingly, it is so arranged that, when the rotary shaft 2 is fitted therein, a similar slit k' is formed also at the side of the rotary shaft 2 confronting said slit k so as to engage both of the slits with each other through a key 7 into one unit for making it possible to transmit rotation of the rotary shaft 2 to the chuck 5 through the sliding movement thereof. Meanwhile, in the forward end portion of the chuck 5, a bore 9 is formed for receiving a drill 8 therein, while a plurality of rows of split grooves are formed in the longitudinal direction along said bore 9, with a male thread e being provided around its peripheral surface. Thus, upon insertion of the drill 8 into the bore 9, the drill 8 is tightened for securing by threadedly engaging a socket 10 from above. The drilling device is further provided with ball bearings 11 and 12 at its front and rear portions as is most clearly seen in Fig. 2.

On the other hand, at the base shoulder portion G of the U-shaped arm 13 fixed to the side face of the chuck receiving holder 3, there is provided a pivot pin 14 around which a grip handle 15 is pivotally supported, and a chuck thrusting arm 16 is integrally mounted at the forward end of the grip handle 15, while an engaging pin 17 is provided at the lower end of said arm 16 for engagement with the slit H of the chuck receiver 4.

The drilling device is further provided with a spring 18 for normally biasing the grip handle 15 in the opened state, and a projection amount adjusting screw 19 provided at an upper back portion of the grip handle 15. When the grip handle 15 is brought into a closed state against the force of the spring 18, the chuck receiver 4 is prevented from rotation to an extent more than necessary through contact of the lower end m of the screw 19 with the starting end n of the base shoulder portion of the U-shaped arm 13. In the above operating procedure, the chuck thrusting arm 16 causes the chuck receiver 4 to be projected, together with the chuck 5, in a direction indicated by an arrow 25, and the amount of projection may be readily altered by properly adjusting a thread length $l_1$ of said adjusting screw 19 from above.

On the other hand, there is also provided a plate thickness adjusting screw 20 which is threaded into the forward end of the U-shaped arm 13 so as to confront a tip of the drill, and which is to be preliminarily adjusted, in its distance $l_2$ up to a head R thereof, to a necessary predetermined length. In the above case, in accordance with the amount of projection of the chuck receiver 4 described earlier, setting of the cut-in depth by the drill 8, during the removal of spot-welded portions to be described later and thickness of the remaining plate following the cut-in, may be effected freely as desired.

At the rear end portion of the drilling device, there is provided a lever 21 for opening and closing a valve, which is arranged to be depressed in the course of closure of the grip handle 15 so as to rotate the spindle motor accommodated within the main body casing 1 for consequent rotation of the drill 8. Upon releasing of the lever 21 from the depression by the opening of the grip handle 15, the spindle motor and the drill are automatically stopped.

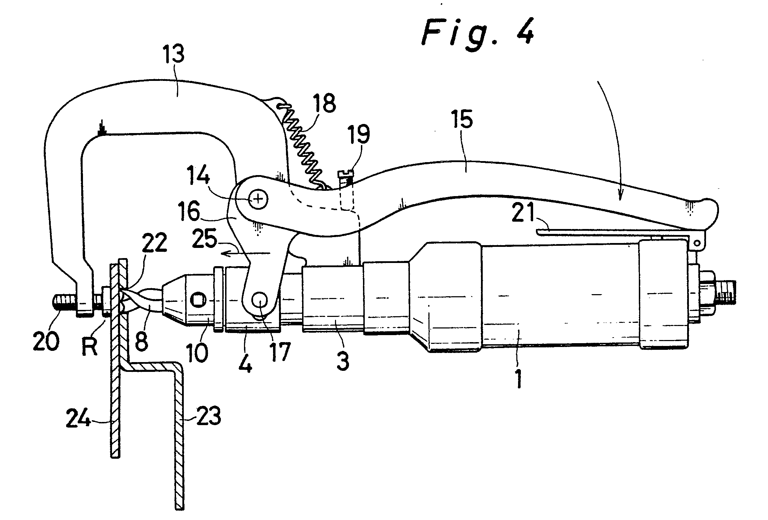

The drilling device according to the present invention has the constructions as described in the foregoing, and for actual use, thickness of the plate to be processed is preliminarily measured to properly adjust both of the projecting amount adjusting screw 19 and the plate thickness adjusting screw 20 in advance according to the thickness of the plate thus measured. After completion of the above procedure, the device is applied to a spot-welded portion 22 by lightly holding the grip handle 15, and as the grip handle 15 is gripped more strongly, the chuck 5 advances in the direction of the arrow 25, while simultaneously, the lever 21 is depressed so that the drill 8 starts cutting into a plate 23 to be separated, while being rotated. In the above case, upon contact of the lower end m of the projection amount adjusting screw 19 with the starting end n of the base shoulder portion of the U-shaped arm 13 during the above cutting-in operation, the cutting-in is not effected any further, and the drill 8 is rotated in the fixed position only idly, and thus, any damages to the other plate 24 not required to be separated may be perfectly prevented (see Fig. 4). It should be further noted that, according to the drilling device of the present invention, not only the position to be drilled is correctly grasped by the employment of the U-shaped arm 13, but also the cutting edge of the drill is stable without slipping, thus resulting in a prolonged service life of the drill.

The present embodiments are to be considered in all respects as illustrative and not restrictive, the scope of the invention being indicated by the claims.

## Claims

1. A drilling device comprising a main body casing (1) with a chuck receiving holder (3), fixed to the main body casing, a U-shaped arm (13), one end of which is connected to the chuck receiving holder (3), means (15, 16) connected to the U-shaped arm for moving the same relative to a drill (8), mounted at the free end of a motor driven chuck (5) and facing the free end of the U-shaped arm, characterized in that the drilling device further comprises a chuck receiver (4) for receiving the chuck (5) and being slidably insertable into the main body casing (1), a grip handle (15) pivotally connected to the base shoulder portion of the U-shaped arm (13) via a pivot pin (14); a chuck thrusting arm (16) mounted integrally at an end of the grip handle (15) and engaging the chuck receiver (4) for moving the chuck receiver (4) towards the free end of the U-shaped arm (13) by depression of the grip handle (15), and a projection amount adjusting screw (19) provided at an upper back portion of the grip handle (15) for adjusting the amount of feed movement of the chuck (5), the tip of the projection amount adjusting screw (19) cooperating with the base shoulder portion of the U-shaped arm (13) to restrict the amount of feed of the chuck (5) by depression of the grip handle (15).

2. A drilling device according to claim 2, characterized in that there is provided a plate thickness adjusting screw (20) fixed at the free end of the U-shaped arm (13) so as to face to the tip portion of the drill (8).

3. A drilling device according to claim 2, characterized in that there are provided a spindle air motor for rotating the chuck (5) via a rotary shaft (2); an air compressor for activating the spindle air motor; a valve provided at the air compressor, for supplying compressed air to the spindle motor in its open state; and a lever (21) for opening and closing a valve of the air compressor, the lever being depressed by the grip handle (15) to open the valve.

## Patentansprüche

1. Bohrvorrichtung, die einen Hauptgehäusekörper (1) aufweist, mit einem am Hauptgehäusekörper befestigten Spannfutteraufnahmhalter (3), einem U-förmigen Arm (13), dessen eines Ende mit dem Spannfutteraufnahmehalter (3) verbunden ist, und mit an den U-förmigen Arm angeschlossenen Mitteln (15, 16) zum Bewegen des Armes gegenüber einem Bohrer (8), der am freien Ende eines motorgetriebenen Spannfutters (5) angeordnet ist und dem freien Ende des U-förmigen Armes gegenüberliegt, dadurch gekennzeichnet, daß die Bohrvorrichtung außerdem folgende Teile aufweist:

eine Spannfutteraufnahme (4), die das Spannfutter (5) aufnimmt und in den Hauptgehäusekörper (1) gleitend einführbar ist;

einen Handgriff (15), der mit einem Schwenkzapfen (14) an dem Basisschulterteil des U-förmigen Arms (13) schwenkbar angeschlossen ist;

einen Spannfutterschiebearm (16), der einstückig an einem Ende des Handgriffes (15) befestigt und mit der Spannfutteraufnahme (4) verbunden ist, um diese in Richtung auf das freie Ende des U-förmigen Armes (13) beim Niederdrücken des Handgriffes (15) zu bewegen, und

eine Vorschubmaßeinstellschraube (19), die am oberen Rückenteil des Handgrippes (15) zum Einstellen der Größe der Vorschubbewegung des Spannfutters (5) angeordnet ist, wobei die Spitze der Vorschumbaßeinstellschraube (19) mit dem Schulterbasisteil des U-förmigen Armes (13) zusammenwirkt, um das Vorschubmaß des Spannfutters (5) beim Niederdrücken des Handgriffes (15) zu begrenzen.

2. Bohrvorrichtung nach Anspruch 1, dadurch gekennzeichnet, daß eine Plattendickeneinstellschraube (20) vorgesehen ist, die am freien Ende des U-förmige Armes (13) derart befestigt ist, daß sie der Spitze des Bohrers (8) gegenüberliegt.

3. Bohrvorrichtung nach Anspruch 2, gekennzeichnet durch einen Spindelluftmotor zum Drehen des Spannfutters (5) mit einer rotierenden Welle (2); einen Luftkompressor zum Betätigen des Spindelluftmotors; ein am Luftkompressor vorgesehenes Ventil für die Zufuhr von Druckluft zum Spindelmotor in seiner Offenstellung und durch einen Hebel (21) zum Öffnen und Schlidßen eines Ventiles des Luftkompressors, wobei der Hebel zum Öffnen des Ventiles von dem Handgriff (15) niedergedrückt wird.

**Revendications**

1. Perceuse comprenant un carter principal de corps (1) avec un porte-mandrin (3) fixé à ce carter principal de corps, un bras à profil en U (13) dont une extrémité est fixée au porte-mandrin (3), des moyens (15, 16) reliés à ce bras à profil en U pour son déplacement relativement à un foret (8) monté à l'extrémité libre d'un mandrin (5) entraîné par un moteur et faisant face à l'extrémité libre du bras à profil en U, caractérisé en ce que cette perceuse comprend en outre un récepteur (4) de mandrin pour recevoir le mandrin (5) et engagé de manière coulissante dans le carter principal de corps (1), une poignée (15) montée pivotante sur la partie de base à épaulement du bras à profil en U (13) au moyen d'une broche de pivotement (14), un bras (16) de poussée du mandrin faisant partie intégrante d'une extrémité de la poignée (15) et s'engageant avec le récepteur (4) de mandrin pour déplacer ce dernier en direction de l'extrémité libre du bras (13) à profil en U à la suite d'une pression exercée sur la poignée (15), et une vis (19) à longueur saillante réglable montée sur la partie arrière supérieure de la poignée (15) pour le réglage de la course du mouvement d'avance du mandrin (5), la pointe de la vis (19) à longueur saillante réglable coopérant avec la partie de base à épaulement du bras à profil en U (13) pour limiter le course d'avance du mandrin (5) due à la pression exercée sur la poignée (15).

2. Perceuse selon la revendication 1 caractérisée en ce qu'il existe une vis (20) réglage d'épaisseur de plaque montée à l'extrémité libre du bras à profil en U (13) de manière à être en face de la pointe du foret (8).

3. Perceuse selon la revendication 2 caractérisé en ce qu'il est prévu un moteur pneumatique de broche pour faire tourner le mandrin (5) par l'intermédiaire d'un arbre rotatif (2), un compresseur d'air pour alimenter le moteur pneumatique de broche, une soupape équipant le compresseur d'air pour la fourniture à son état d'ouverture d'air comprimé au moteur de broche, et un levier (21) pour ouvrir et fermer la soupape du compresseur d'air, ce levier étant enfoncé par la poignée (15) pour ouvrir la soupape.

Fig. 1

Fig. 3

*Fig. 2*

# Fig. 4